# EUROPEAN PATENT APPLICATION

(11) **EP 1 085 632 A1**
(43) Date of publication of application: **21.03.2001**
(21) Application number: 99830582.5
(22) Date of filing: 14.09.1999
(51) Int. Cl.: H02G 5/06

(54) **Structure of conductors for transmission of electric energy**

(71) Applicant: Marconi Communications network Components & Services S.p.A., 05100 Terni (IT)
(72) Inventor: Cresta Massimo, c/o Marconi Communications, 05100 Terni (IT)
(74) Representative: Steinfl, Alessandro

(57) **Abstract**

A structure of conductors (1) for electric energy transmission allows an optimal compensation of the electrodynamic forces generated among its conduction members (3, 5, 6), ensuring in the meantime the protection and the insulation of the conduction members (3, 5, 6) without the use of insulators or of other confinement systems, and comprising an inner conduction member (3) developing along an axis (A) of the coaxial structure; and one or more outer tubular conductor members (5, 6), made of a conducting material of the resistive type, coaxially and symmetrically located therebetween and with respect to said inner conductor member (3), between each of said conduction members (3, 5, 6) there an effective dielectric insulation being maintained, wherein the outermost (5) of said outer linear conduction members forms a rigid outer sheath of the structure of conductors (1).

## Description

The present invention relates to a structure of conductors for transmission of electric energy, wherein for transmission both the power transmission over long distances and the electric power distribution to switchboards, power plants and the like, in direct or alternating current and in low, medium or high voltage, under normal working conditions are understood.

For normal running conditions an electric power transmission taking place at conductivity values greater than zero is understood, as is the case with the usual metallic conductors like aluminium, copper, etc., and not under low-temperature superconducting conditions.

In this context, various power transmission structures are known, all referable to a scheme comprising a system of electric cables and/or bars.

Usually, for the transportation of large quantities of electric energy, conductor structures are used, consisting of, e.g., variously braided electric cables located in parallel forming a transmission structure.

Similarly, for the electric power distribution in plants such as distribution panels, cabins, power plants, conductor structures are used, which comprise using bars mostly located in parallel.

This type of structures suffers from drawbacks related to the mutual influences that can take place among adjacent live cables or bars.

In case of alternate , current transmission, e.g. three-phase, the structures provide three different parallel conductor members, cables or bars, each electrified by an alternate current shifted of 120° with respect to the other conductor members.

For high currents, this entails relevant magnetic fields generating electrodynamic forces among the conductor members, and this can cause considerable problems at the system designing stage, as well as in the operation thereof.

Moreover, this type of systems requires protection, in order to avoid electrocutions and also short circuits among the conductor members. Analogous problems are found in case of alternate current transmission in general, not just three-phase, wherein at least two conductor members are placed adjacent and belonging to the same line or to the same circuit.

Even in case of direct current transmission, where usually two or more conductor members are placed adjacent and belonging to the same circuit, considerable electrodynamic stresses among members can take place during transients.

The technical problem underlying the present invention is that of providing a coaxial structure for electric power transmission allowing to overcome the drawbacks mentioned with reference to the known art.

Such problem is overcome by a structure of conductors for transmission of electric energy comprising:
* an inner conductor member, in a conducting material of the resistive type, developing along an axis of the coaxial structure; and
* one or more outer tubular conduction members, in a conducting material of the resistive type, coaxially and symmetrically located among them and with respect to said inner linear conduction member,
between each of said conduction members an effective dielectric insulation being maintained, in which the outermost of said linear outer conduction members forms an outer rigid sheath of the structure of conductors.

The main advantage of the structure of conductors according to the present invention lies in allowing an optimal compensation of the electrodynamic forces generated among the conduction members during the power transmission, in the meantime ensuring the protection and the insulation of the conduction members without using insulators or other confinement systems.

Interaction forces among conductors take place because the outer conductors have a shielding effect against the propagation of the generated electromagnetic field. This effect allows a compensation of the electromagnetic emissions irradiated in the surrounding space from the structure of conductors.

In this case, the advantage is that of having transmission lines with an extremely low level of electromagnetic emissions, even for high conduction voltages.

The present invention will hereinafter be described according to some of its preferred embodiments, given by way of example and not for limiting purposes, with reference to the following examples and to the annexed drawings, wherein:
* figure 1 shows a schematic perspective view of a conductor structure according to the invention at a shunt zone;
* figure 2 is a section of said shunt area along the section line A-A of figure 1;
* figure 3 is a schematic perspective view of a structure of conductors of figure 1;
* figure 4 is a schematic perspective view of a second embodiment of a structure of conductors according to the invention; and
* figure 5 is a schematic perspective view of a third embodiment of a structure of conductors according to the invention.

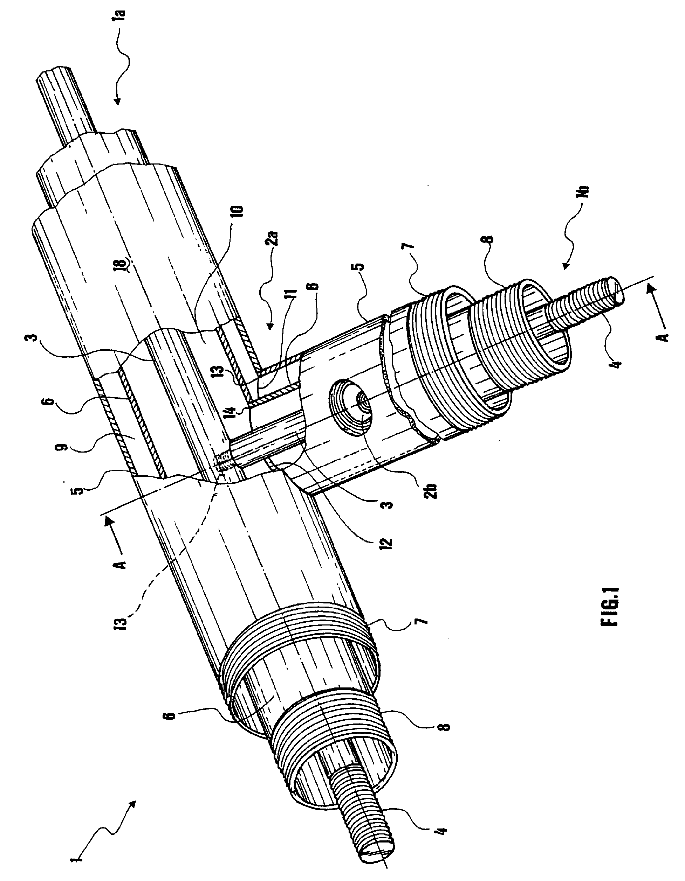

With reference to figures 1 to 3, a first embodiment of a structure of conductors for transmission of electric energy is globally referenced as, in the present example for the power transmission in alternating three-phase current.

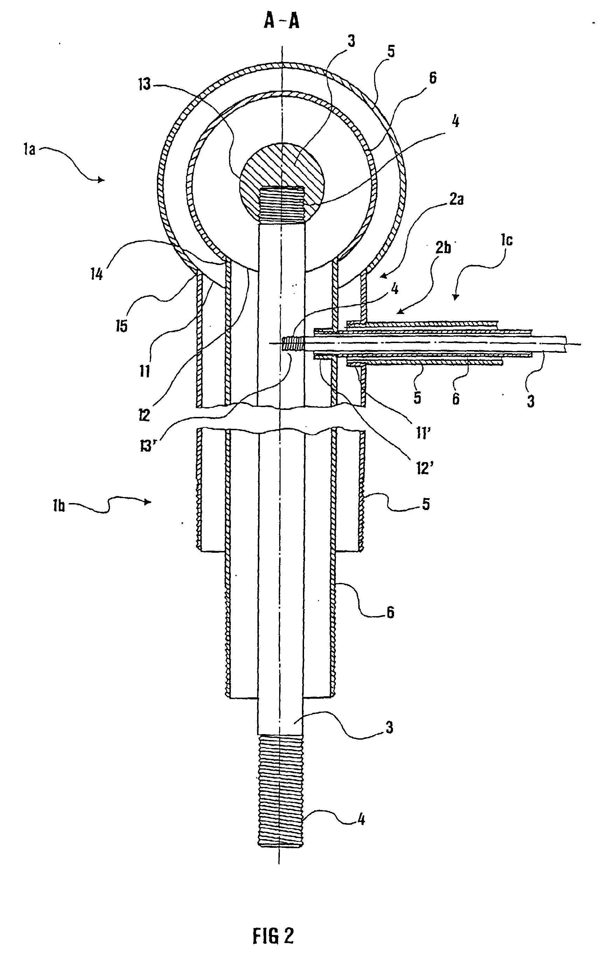

Said structure 1 is exemplified, in figures 1 and 2, by a main conductor 1a connected, at a first shunt 2a, to a primary shunted conductor 1b in turn connected, at a second shunt 2b, to a secondary shunted conductor.

Such structure is of the type that can be used in distribution stations to connect main lines to disconnecting breakers, line transformers, powered plants and so on.

In each of said embodiments, said structure of conductors generally comprises an inner conduction member 3, of the linear type, formed by a tubular or rigid solid rod of a metallic material of the resistive conduction type, e.g. copper. The conduction member develops along an axis A that forms the axis of symmetry of the structure 1.

The inner conduction member 3 has first threaded ends 4 to allow the electrical connection to other structures and plants.

The structure of conductors 1 comprises a plurality of outer tubular conduction members for the alternate three-phase current transmission. Said outer conduction members are coaxially and symmetrically located among them and with respect to said inner conduction member 3, as to which, rather than for their being located outside of the structure 1, the tubular members are understood to be outer.

In fact, said outer members comprise a outer rigid tube 5, forming the outer rigid sheath of the structure 1, and an intermediate rigid tube 6. For the above-described purposes, each tube 5, 6, has second and third threaded ends, indicated with 7 and 8, having a outer thread.

An effective dielectric insulation is maintained among said conduction members 3, 5, 6 in the first gap 9, between the outer tube 5 and the intermediate tube 6, and in the second gap 10, between the intermediate tube 6 and the center rod 3.

In the present embodiment, the dielectric insulation is maintained by a suitable air gap, whereas the outer tube 6 provides the required containment to confine possible arcings and the like.

Said gap is maintained, where required, with conventional spacers, not shown, obviously made of in insulating materials.

Also the outer conduction members 5, 6 are made of in metallic material of the conduction resistive type, e.g. aluminium.

The rods 3 and the tubes 5, 6 can be of various diameters and thicknesses. In particular, when the conduction members 3, 5, 6 are performed in the same conducting material, each conduction member 3, 5, 6 can have the same solid cross section in order to ensure the same linear resistivity for each conductor.

Otherwise, as in the present embodiment wherein the conduction members 3, 5, 6 are made of in different materials, the sections thereof will be inversely proportional to the respective specific conductivity.

The described solution, copper for the inner member 3 and aluminum for the outer members, allows the use of a smaller and more machinable piece for the tubes 5,6.

With reference to figures 1 and 2, hereinafter two different and already mentioned shunts 2a, 2b, implementing two solutions differing therebetween, yet sharing the same constructive concept, will be described.

At the first shunt 2a, the outer tube 5 comprises a first circular opening 11 having a first predetermined diameter. On the other hand the intermediate tube 6 comprises a second circular opening 12 having a second predetermined diameter smaller than the former one.

On the other hand the rod 3 comprises a dead hole 13 having a third predetermined diameter even smaller than the aforesaid second diameter.

The first and the second opening 11, 12 and the dead hole 13 are concentric, so that the innermost of the three, the dead hole 13, is accessible through the opening 11, 12, whereas the second opening 12 is accessible through the first opening.

The dead hole 13 is connected to a conduction member 3 of the structure of conductors 1 forming said primary shunted conductor 1b. For this purpose, the dead hole 13 has an inner counterthread apt to connect with the corresponding threaded terminal, i.e., of said first end 4 of the engaged rod 3.

The second opening 12 has a respective second edge 14 to the end edge of an intermediate tube 6 of the primary shunted conductor 1b and welded thereto.

The first opening 11 has a respective first edge 15 to the end edge of an outer tube 5 of the primary shunted conductor 1b and welded thereto.

Thus, also at the first shunt 2a, the outer tube 5 of the connected structure of conductors 1a, 1b form a continuous outer sheath.

At the second shunt 2b, the outer tube 5, this time of the primary shunted conductor 1b, comprises a first circular opening 11' having a first predetermined diameter, whereas the intermediate tube 6 comprises a second circular opening 12' having a second predetermined diameter smaller than the former one.

On the other hand the rod 3 comprises a dead hole 13' having a third predetermined diameter even smaller than the aforesaid second diameter.

The first and the second opening 11', 12' and the dead hole 13' are concentric, so that the innermost of the three, the dead hole 13', is accessible through the opening 11', 12' whereas the second opening 12' is accessible through the first one.

The dead hole 13' is connected to a conduction member 3 of the structure of conductors 1 forming said primary shunted conductor 1b. To this end, the dead hole 13' has an inner counterthread apt to connect with the threaded terminal of the engaged rod 3.

The second opening 12' has a respective second collar 16 protruding inside the intermediate tube 6 and having, on the inner face thereof, a suitable counterthread, apt to screwingly engage the corresponding third threaded end 8 of a intermediate tube 6 of the secondary shunted conductor 1c.

The first opening 11' has a respective first collar 17 protruding inside the outer tube 5 and having, on the inner face thereof, a suitable counterthread, apt to screwingly engage the corresponding second threaded end 7 of an outer tube 5 of the secondary shunted conductor 1c.

With this structure solution as well, the outer conductor of the connected structure of conductor 1b, 1c form a continuous outer sheath.

In general, each of the outer tubular members 5, 6 comprises a respective opening 11, 12 in which the inner tubular member 3 has a dead hole 13, the diameters of the opening 11, 12 and of the hole 13 tapering inwardly to allow the connection of an inner tubular member 3 in said dead hole 13 and of an outer tubular member 5, 6 at the edge of the respective opening 11, 12.

In the above-described structure of conductors 1, the removal of the residual heat produced by the Joule effect in the conduction members 3, 5, 6, takes place by heat transmission between the inner and outer faces of the conduction members 3, 5, 6. The amount of heat removable on the outside increases when moving from the axis of the structure 1, however the outer surface of the outer tube 5, indicated with 18, is the wider available.

In this embodiment, said outer surface 18 forms means for the heat removable means.

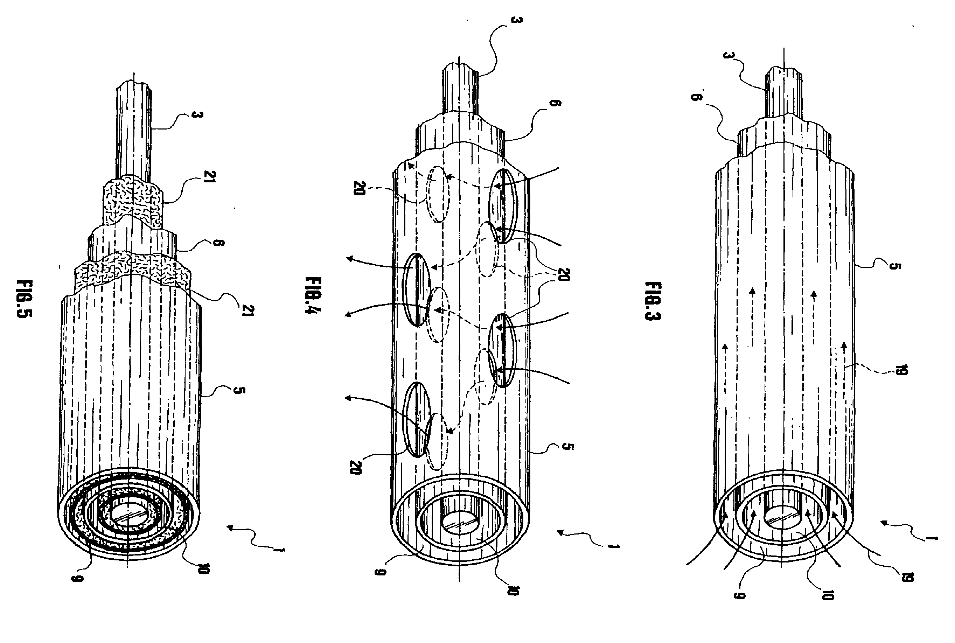

With reference to figures 3 e 4, two additional variants are described to implement said heat removal means.

In figure 3, a structure of conductors 1 has an outer tube 5 without openings. Inside the gaps 9, 10 a flow 19 of air or other thermal carrier gas is circulated, preferably dry and with high dielectric insulation, cooling the surfaces of the conduction members 3, 5, 6 by forced convection.

In this embodiment, said dry gaseous flow 19 forms said heat removal means.

It is apparent that the flow 19 is free to pass and flow through said first and second shunt 2a, 2b allowing the heat removal.

In order to inlet the dry gaseous flow 19 a joint, designed e.g. likewise one of the above-described shunts 2a, 2b, is sufficient, obviously with the end portion of the joint made of an insulating material.

With reference to figure 4, a structure of conductors 1 is shown having an outer tube 5 and an intermediate tube 6 provided with a plurality of vents 20, globally forming airways for the natural convection, which triggers spontaneously when the conductor members 3, 5, 6 overheat above the room temperature.

In this embodiment said vents 20 form, the heat removal means.

This solution is suitable for high current intensities and low voltage differences (e.g., in the direct current mode), however it requires a dry environment to avoid possible arcings during transients, that actually entail relevant voltage falls.

With reference to figure 5, a structure of conductors 1 suitable for high voltage differences and /or for other occurrences is described. In this embodiment, in the gaps 9, 10 the structure is provided with dielectric barriers 21.

Said structures are suitable for various working conditions. They are apt to be raised or laid underground in trenches. Moreover, their installation is remarkably eased, and it can be carried out with the known pipelining systems and the like.

Further, said structures are versatile and sturdier with respect to the conventional structures with adjacent conductor members.

To the above-described structure of conductors a person skilled in the art, in order to satisfy further and contingent needs, may effect several further modifications and variants, all however comprised within the protective scope of the present invention, as defined by the annexed claims.

## Claims

1. A structure of conductors (1) for electric eneregy transmission comprising:
* an inner conduction member (3), in a conducting material of the resistive type, developing along an axis (A) of the structure (1); and
* one or more outer tubular conduction members (5, 6), in a conducting material of the resistive type, coaxially and symmetrically located therebetween and with respect to said inner conduction member (3),
between each of said conduction members (3, 5, 6) there an effective dielectric insulation being maintained, wherein the outermost (5) of said outer tubular conduction members forms an outer rigid sheath of the structure of conductors (1).

2. Structure of conductors (1) for transportation and/or distribution of electric energy in alternate three-phase current, comprising:
* an inner conduction member (3), in conducting material of the resistive type, developing along an axis (A) of the structure (1); and
* a first and a second tubular conduction members (5, 6), formed by a rigid outer tube (5) and by a intermediate tube (6) respectively, both made of a conducting material of the resistive type, coaxially and symmetrically located therebetween and with respect to said inner conduction member (3),
between each of said conduction members (3, 5, 6) an effective dielectric insulation being maintained, wherein the outer tube (5) forms an outer rigid sheath of the structure of conductors (1).

3. The structure (1) according to claim 1 or 2, wherein the inner conduction member (3) is a solid rod.

4. The structure (1) according to claim 1 or 2, wherein said conducting resistive material is a metal.

5. The structure (1) according to claim 4, wherein said metal is selected from the group comprising copper, aluminum, steel.

6. The structure (1) according to claim 5, wherein the inner conduction member (3) is made of copper and wherein the tubular conduction members (5, 6) are made of aluminum.

7. The structure (1) according to claim 1 or 2, wherein the ends (4, 7, 8) of the conduction members (3, 5, 6) are threaded.

8. The structure (1) according to claim 1 o 2, wherein the conduction members (3, 5, 6) have the same linear resistivity.

9. The structure (1) according to claim 1 or 2, wherein all the tubular conduction members are rigid.

10. The structure (1) according to claim 1 or 2, having a shunt (2a, 2b) wherein each of said one or more outer tubular members (5, 6) comprises a respective opening (11, 12; 11', 12') and wherein the inner tubular member (3) has a hole (13; 13'), the diameters (11, 12; 11', 12') of the opening and of the hole (13; 13') tapering in order to allow the connection of an inner tubular member (3) into said hole (13; 13') and of an outer tubular member (5, 6) at the edge of the respective opening (11, 12; 11', 12').

11. The structure (1) according to claim 10, wherein the opening (11, 12; 11', 12') and the hole (13; 13') are concentric.

12. The structure (1) according to claim 10, wherein the hole (13; 13') has an inner counterthread apt to connect to a corresponding threaded terminal of a respective inner conduction member (3).

13. The structure (1) according to claim 10, wherein said opening (11, 12) has a respective edge (14, 15) matched to the end edge of a corresponding outer tubular member |(5, 6) and welded thereto.

14. The structure (1) according to claim 10, wherein said opening (11', 12') has a respective collar (17, 16) protruding with respect to the respective outer tubular member (5, 6) having, on the inner face thereof, a counterthread apt to screwingly engage a corresponding threaded end (7, 8) of the outer tubular member (5, 6).

15. The structure (1) according to claim 1 or 2, comprising heat removal means produced by the Joule effect (18, 19, 20).

16. The structure (1) according to claim 15, wherein said heat removal means comprise the outer surface (18) of the outer sheath.

17. The structure (1) according to claim 15, wherein said heat removal means comprise a dry gaseous flow (19) circulated inside the gaps (9, 10) among the conductor members (3, 5, 6).

18. The structure (1) according to claim 15, wherein said heat removal means comprise a plurality of vents (20) in said outer tubular members (5, 6), globally forming airways for the natural convection that is spontaneously triggered when the conduction members (3, 5, 6) overheat above the room temperature.

19. The structure (1) according to claim 1 or 2, wherein, in the gaps (9, 10) among the conductor members (3, 5, 6), the structure (1) is provided with dielectric barriers (21) .
